(19) Europäisches Patentamt / European Patent Office / Office européen des brevets

(11) **EP 4 338 869 A1**

(12) **EUROPEAN PATENT APPLICATION**
published in accordance with Art. 153(4) EPC

(43) Date of publication:
**20.03.2024 Bulletin 2024/12**

(21) Application number: **22807423.3**

(22) Date of filing: **09.05.2022**

(51) International Patent Classification (IPC):
**B23B 1/00** (2006.01)　　**G05B 19/4093** (2006.01)
**G05B 19/4155** (2006.01)

(52) Cooperative Patent Classification (CPC):
**B23B 1/00; B23Q 15/00; B23Q 15/013;**
**G05B 19/4093; G05B 19/4155**

(86) International application number:
**PCT/JP2022/019623**

(87) International publication number:
**WO 2022/239721 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2021　JP 2021080956**

(71) Applicant: Star Micronics Co., Ltd.
**Shizuoka-shi, Shizuoka 422-8654 (JP)**

(72) Inventors:
• **SHINOMIYA, Katsuhiro**
**Shizuoka-shi, Shizuoka 422-8654 (JP)**
• **IKEGAYA, Takeshi**
**Shizuoka-shi, Shizuoka 422-8654 (JP)**
• **KAMO, Shotaro**
**Shizuoka-shi, Shizuoka 422-8654 (JP)**

(74) Representative: **Grünecker Patent- und
Rechtsanwälte
PartG mbB
Leopoldstraße 4
80802 München (DE)**

(54) **MACHINE TOOL**

(57)　A machine tool capable of facilitating the setting of the vibration cutting conditions. A control unit U3 acquires a feed speed of a object to be fed without a vibration (Fa), a number of rotations of a spindle required for a single cycle of the vibration (K), and a returning amount (R) representing a distance of a returning feed per the single cycle of the vibration. According to the acquired parameters, the control unit U3 decides at least one parameter among a cutting amount (D) representing a distance of a change in a position of the object per the single cycle of the vibration, a cutting feed speed (F) of the object, and a returning feed speed (B) of the object. The control unit U3 controls the position of the object to be fed with the vibration at least according to the decided parameter.

*FIG. 9*

VIBRATION CONTROL PROCESS

RECEIVE INPUT OF VIBRATION FEED COMMAND CM1 — ST1
EX.　G** X**_F0.03_K2_R0.01
"K" IS LIMITED TO "K = 2/OD" IN THE CASE OF K < 1
(OD = 3, 5, 7 ···)

ST2

K > 1
$D = K \times Fa$
$F = \dfrac{K \times Fa + R}{K - 1}$,　$B = R$

K < 1
$D = K \times Fa$
$F = \dfrac{2(K \times Fa + R)}{K}$,　$B = \dfrac{2R}{K}$

ST3

Fa = 0.03 (mm/rev)
K = 2 (rev/cycle)
R = 0.01 (mm)

TOOL POSITION (mm)
SPINDLE ROTATION ANGLE (°)

EP 4 338 869 A1

**Description**

**TECHNICAL FIELD**

The present invention relates to a machine tool capable of cutting a workpiece with a tool while the workpiece is gripped by a spindle.

**BACKGROUND ART**

An NC (numerical control) lathe provided with the spindle is known as a kind of the machine tool. Along swarf from the workpiece as rotated with the spindle might have an influence on machining performance. Vibration cutting is known as a method for breaking up a swarf or chip by alternately repeating a cutting feed and a returning feed along a feed axis. The cutting feed is a feed of the tool cutting into the workpiece along the feed axis. The returning feed is a feed of the tool moving away from the workpiece. Breaking-up performance varies according to spindle phase, vibration amplitude, feed speed in the cutting feed, and feed speed in the returning feed. An operator sets the parameters in a machining program to be executed by the NC lathe.

The machine tool disclosed in Patent Document 1 calculates a return position of the tool on a substantial feed line upon completion of a single vibration according to the number of tool vibrations and the tool feed amount per a single rotation of the spindle. The machine tool then sets a direction change point changing from the cutting feed to the returning feed on an amplitude line offset from the substantial feed line by an amplitude got by multiplying the tool feed amount by a predetermined amplitude feed ratio. The machine tool then feeds the tool to the direction change point and then returns the tool to the return position on the substantial feed line upon completion of the single vibration. The amplitude feed ratio is previously decided, thus adjustment of the amplitude is not permitted.

**PRIOR ART DOCUMENT**

**PATENT DOCUMENT**

Patent Document 1: Japanese Patent Application Publication No.2019-28831

**TECHNICAL SOLUTION**

Conventionally, the operator needs to adjust the parameters by trial and error to improve swarf breaking-up performance. The parameters includes at least one of the spindle phase, the vibration amplitude, the feed speed in the cutting feed, or the feed speed in the returning feed. The machine tool in Patent Document 1 does not permit adjustment of the vibration amplitude. The problem to be solved is how to facilitate the setting of the vibration cutting conditions including the vibration amplitude. Such problem resides in the lathe and also in various types of machine tool such as a machining center.

The present invention discloses a machine tool capable of facilitating the seting of the vibration cutting conditions.

A machine tool of the invention includes:

a rotation driving unit adapted to rotate a spindle gripping a workpiece;
a feed driving unit adapted to feed at least one object along a feed axis, the object comprising the spindle and a tool for cutting the workpiece; and
a control unit adapted to control the object to be fed with a vibration along the feed axis to cut the workpiece, the vibration comprising a cutting feed in a direction cutting into the workpiece and a returning feed in a direction opposite to the direction cutting into the workpiece;
wherein the control unit acquires a feed speed of the object to be fed without the vibration (Fa), a number of rotations of the spindle required for a single cycle of the vibration (K), and a returning amount (R) representing a distance of the returning feed per the single cycle of the vibration,
according to the feed speed of the object (Fa), the number of rotations of the spindle (K), and the returning amount (R), the control unit decides at least one parameter among a cutting amount (D) representing a distance of a change in a position of the object per the single cycle of the vibration, a cutting feed speed (F) representing a speed of the object in the cutting feed, and a returning feed speed (B) representing a speed of the object in the returning feed, and the control unit controls the position of the object to be fed with the vibration at least according to the decided parameter.

A machine tool of the invention includes:

a rotation driving unit adapted to rotate a spindle gripping a workpiece;

a feed driving unit adapted to feed at least one object along a feed axis, the object comprising the spindle and a tool for cutting the workpiece;

a control unit adapted to control the object to be fed with a vibration along the feed axis to cut the workpiece, the vibration comprising a cutting feed in a direction cutting into the workpiece and a returning feed in a direction opposite to the direction cutting into the workpiece; and

a machine learning unit adapted to generate a learned model through application of a machine learning according to a number of rotations of the spindle per unit time (S), a feed speed of the object to be fed without the vibration (Fa), a number of rotations of the spindle required for a single cycle of the vibration (K), and a returning amount (R) representing a distance of the returning feed per the single cycle of the vibration we well as a determination result (E) representing whether or not a position of the object at a first change point overlaps a position of the object at a second change point, the first change point being a point that the cutting feed changes to the returning feed while the second change point being a point that the returning feed changes to the cutting feed, and the learned model allowing a computer to decide the number of rotations of the spindle (K) and the returning amount (R) that generates an overlap between the positions of the object at the first change point and the second change point according to the number of rotations of the spindle per unit time (S) and the feed speed of the object (Fa).

The invention provides a machine tool capable of facilitating the seting of the vibration cutting conditions.

## BRIEF DESCRIPTION OF THE DRAWINGS

FIG. 1 schematically shows a configuration of a machine tool.

FIG. 2 is a block diagram schematically showing a configuration of an electrical circuit of a machine.

FIG. 3 schematically shows a tool position with respect to a spindle rotation angle in the case that the number of rotations of the spindle required for a single cycle of vibration K equals two.

FIG. 4 schematically shows a tool position with respect to a spindle phase in the case that the number of rotations of the spindle required for a single cycle of vibration K equals two.

FIG. 5 schematically shows a tool position with respect to a spindle rotation angle in the case that the number of rotations of the spindle required for a single cycle of vibration K equals three.

FIG. 6 schematically shows a tool position with respect to a spindle rotation angle in the case that the number of rotations of the spindle required for a single cycle of vibration K equals 2/3.

FIG. 7 schematically shows a tool position with respect to a spindle phase in the case that the number of rotations of the spindle required for a single cycle of vibration K equals 2/3.

FIG. 8 schematically shows a tool position with respect to a spindle phase in the case that the number of rotations of the spindle required for a single cycle of vibration K equals 2/5.

FIG. 9 schematically shows a vibration control process in response to a vibration feed command.

FIG. 10 schematically shows a machine tool provided with a machine learning unit.

FIG. 11 schematically shows a flowchart of a learning process.

FIG. 12 schematically shows a flowchart of a vibration control process.

FIG. 13 schematically shows a machine tool provided with a machine learning unit.

FIG. 14 schematically shows a configuration of an information table.

FIG. 15 schematically shows another vibration control process in response to a vibration feed command not designating a returning amount R.

## MODE FOR INVENTION

Hereinafter, an embodiment of the present invention will be described. The embodiment is only an example of the invention. The features disclosed in the embodiments may not necessarily all be required to solve the problem.

(1) Summary of technology of the invention

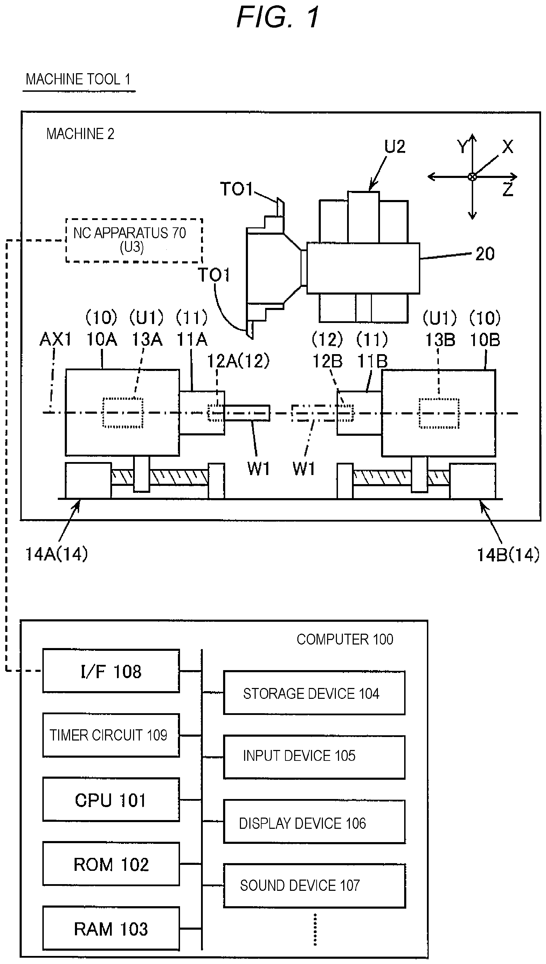

Technology of the invention is being summarized referring FIG. 1 to FIG. 15. The drawings only schematically show examples of the invention. The magnification may be different and the drawings may not match to each other. Any element of the technology may not be limited to the specific element denoted by a symbol.

[Embodiment 1]

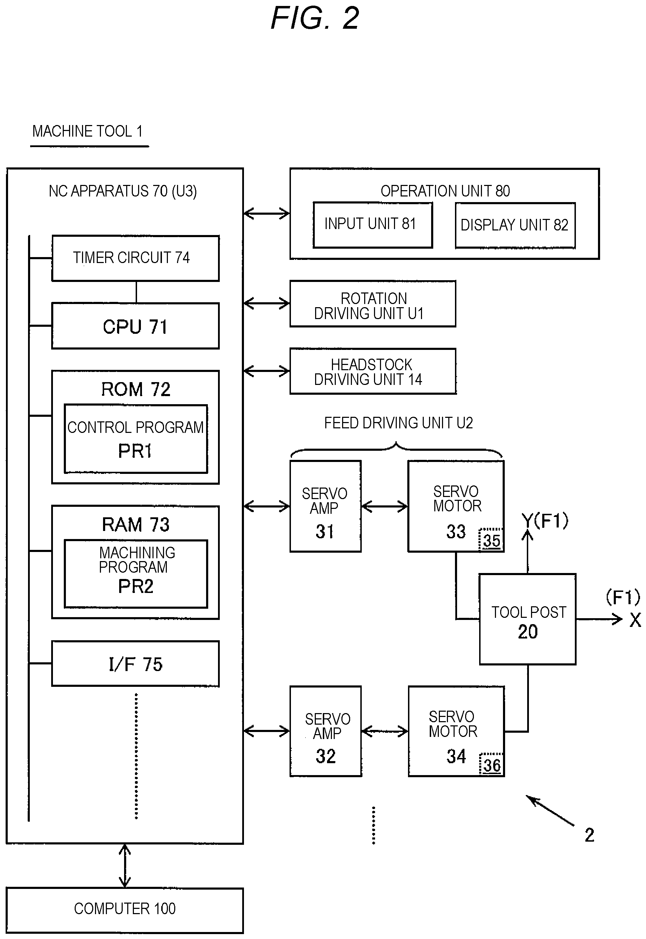

As shown in FIG. 1 and FIG. 2, a machine tool 1 of an embodiment of the invention is provided with a rotation driving unit U1, a feed driving unit U2, and a control unit U3. The rotation driving unit U1 rotates a spindle 11 gripping a workpiece W1. The feed driving unit U2 feeds at least one object along a feed axis F1. The object may include the spindle 11 and a tool TO1 cutting the workpiece W1. The control unit U3 controls the object (the tool TO1, for example) to be fed with a vibration along the feed axis F1. The vibration includes a cutting feed M1 of the tool TO1 in the direction toward the workpiece W1 and a returning feed M2 of the tool TO1 in the direction opposite to the direction toward the workpiece W. The control unit U3 acquires a feed speed of the object to be fed without the vibration (Fa), a number of rotations of the spindle 11 required for a single cycle of vibration (K), and a returning amount (R) representing a distance of the returning feed M2 per a single cycle of vibration. Accordingly, the control unit U3 decides at least one parameter among a cutting amount (D) representing a distance of a change in the position of the object per the single cycle of vibration, a cutting feed speed (F) of the object, and a returning feed speed (B) of the object. The control unit U3 then controls the position of the object at least by using the decided parameter.

The embodiment allows the setting of the returning amount (R) as well as the feed speed of object to be fed without the vibration (Fa) and the number of rotations of the spindle 11 (K). Accordingly, the operator can set the parameters including the vibration amplitude. Furthermore, the embodiment eliminates the need of setting at least some of the cutting amount (D), the cutting feed speed (F) and the returning feed speed (B). The embodiment provides a machine tool capable of facilitating the setting of the vibration cutting conditions.

The machine tool may include a lathe and a machining center. The feed driving unit may feed the tool along the feed axis without feeding the workpiece, may feed the workpiece along the feed axis without feeding the tool, or may feed both of them along the feed axis. The control unit may accept an input for any undecided parameters among the cutting amount (D), the cutting feed speed (F), and the returning feed speed (B). Desirably, the control unit may decide at least one of the cutting feed speed (F) or the returning feed speed (B) according to the parameters (Fa), (K) and (R) while accepting an input of the cutting amount (D). The remarks described above may be applied to the following embodiments.

[Embodiment 2]

The control unit may decide the cutting amount (D), the cutting feed speed (F), and the returning feed speed (B) according to the feed speed of the object to be fed without the vibration (Fa), the number of rotations of the spindle (K), and the returning amount (R). The control unit may control the position of the object according to the cutting amount (D), the cutting feed speed (F), and the returning feed speed (B). The embodiment eliminates the need of setting any parameter other than the feed speed of the object (Fa), the number of rotations of the spindle (K), and the returning amount (R). The embodiment provides a machine tool capable of further facilitating the setting of the vibration cutting conditions.

[Embodiment 3]

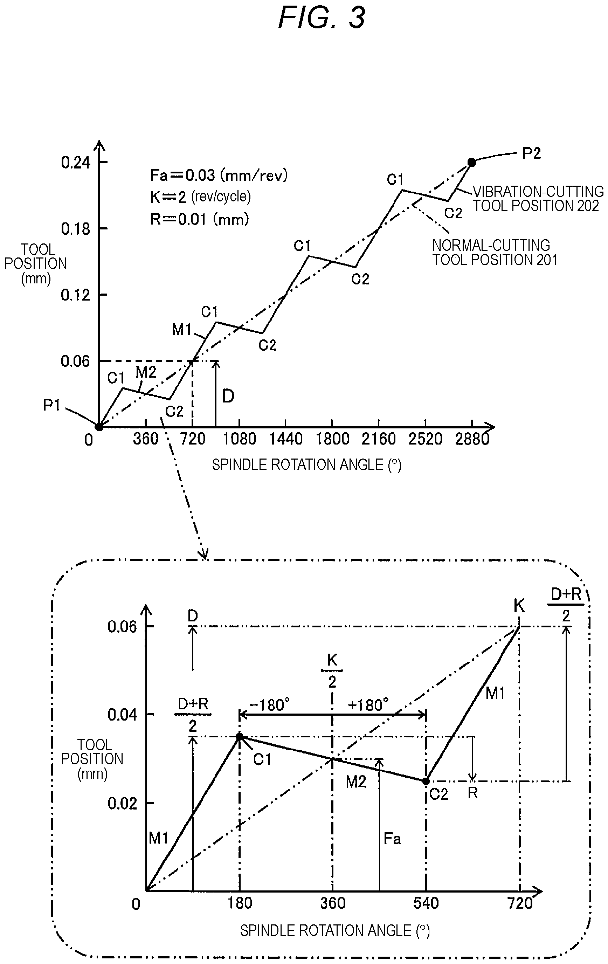

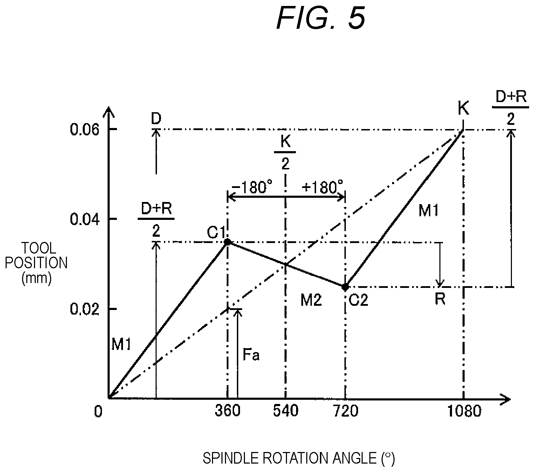

In the case that the number of rotations of the spindle 11 (K) is greater than a single rotation, as shown in FIG. 3 and FIG. 5, the control unit 3 may set the difference in rotation angle of the spindle 11 to 360 degrees between a first change point C1 and a second change point C2. The first change point C1 is a point that the cutting feed M1 changes to the returning feed M2 in a single cycle of vibration. The second change point C2 is a point that the returning feed M2 changes to the cutting feed M1 in the single cycle of vibration. Coincidence of spindle phases at the first change point C1 and the second change point C2 can improve swarf breaking-up performance. The embodiment provides a machine tool capable of breaking up chips in the case that the number of rotations of the spindle (K) is greater than one.

[Embodiment 4]

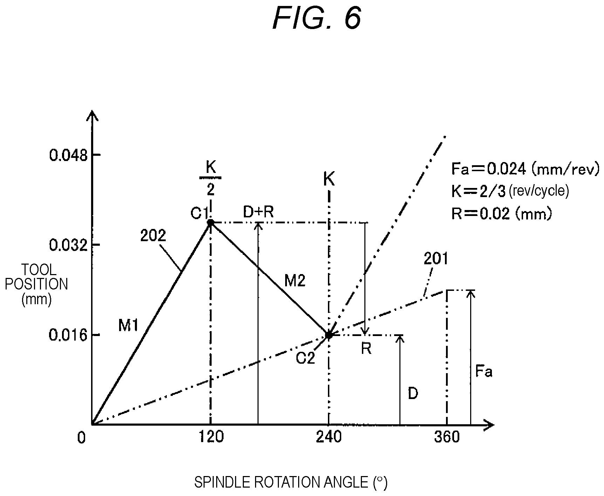

As shown in FIG. 6, when the number of rotations of the spindle (K) has a denominator of an odd number of three or more and a numerator of two, the control unit U3 sets a difference in rotation angle of the spindle to $\{(K/2) \times 360\}$ degrees between the first change point C1 and the second change point C2. Coincidence of spindle phases at the first change point C1 and the second change point C2 can improve swarf breaking-up performance. The embodiment provides a machine tool capable of breaking up chips in the case that the number of rotations of the spindle (K) is smaller than one.

[Embodiment 5]

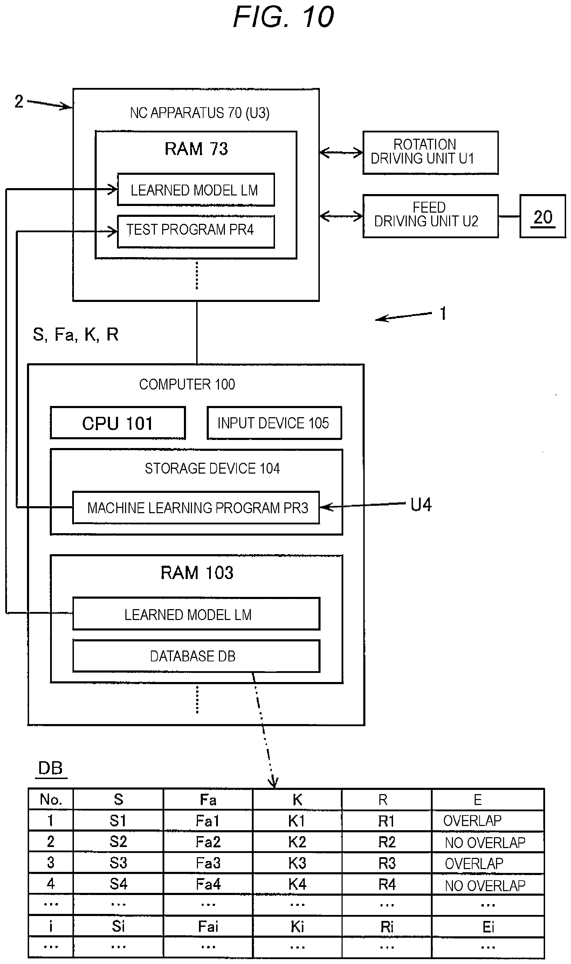

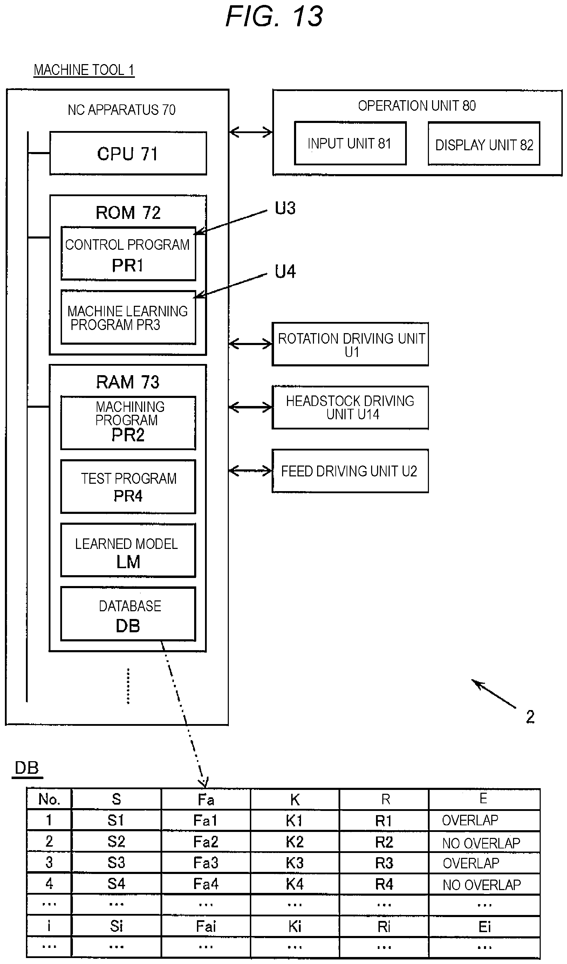

As shown in FIG. 10 and FIG. 13, the machine tool 1 of another embodiment includes a rotation driving unit U1, a feed driving unit U2, a control unit U3, and a machine learning unit U4. The rotation driving unit U1 rotates the spindle 11 gripping the workpiece W. The feed driving unit U2 feeds at least one object along a feed axis F1. The object includes the spindle 11 and a tool TO1 for cutting the workpiece. The control unit U3 controls the object to be fed with a vibration along the feed axis F1 to cut the workpiece W. The vibration includes a cutting feed M1 in a direction cutting into the workpiece W and a returning feed M2 in a direction opposite to the direction cutting into the workpiece W. The machine learning unit U4 generates a learned model LM through application of a machine learning according to a number of rotations of the spindle per unit time (S), a feed speed of the object to be fed without the vibration (Fa), a number of rotations of the spindle required for a single cycle of the vibration (K), and a returning amount (R) representing a distance of the returning feed per single cycle of the vibration we well as a determination result (E) representing whether or not a position of the object at a first change point C1 overlaps a position of the object at a second change point C2. The first change point C is a point that the cutting feed M1 changes to the returning feed M2 while the second change point C2 is a point that the returning feed M2 changes to the cutting feed M1. The learned model LM allows a computer to decide the number of rotations of the spindle (K) and the returning amount (R) that generates an overlap between the positions of the object at the first change point C1 and the second change point C2 according to the number of rotations of the spindle per unit time (S) and the feed speed of the object (Fa).

A variation in the parameters (S) and (Fa) affects the parameters (K) and (R) to be set to efficiently break up the chips. These parameters (S, Fa, K, R) and the determination result (E) can be used to generate the learned model LM though application of machine learning. By using the learned model LM, according to the "number of rotations of the spindle 11 per unit time (S)" and the "feed speed of the object to be fed without the vibration (Fa), the machine tool can decide the "the number of rotations of the spindle 11 required for a single cycle of the vibration (K)" and the "returning amount (R)" that generates an overlap of the positions of the object at the first change point C1 and the second change point C2. The embodiment can provide a machine tool capable of generating the learned model facilitating the setting of the vibration cutting conditions.

The machine tool may include a combination of a machine and a computer connected to the machine. The machine learning may include using a value calculated from the "number of rotations of the spindle per unit time (S)", using a value calculated from the "feed speed of the object to be fed without the vibration (Fa)", using a value calculated from the "number of rotations of the spindle required for a single cycle of the vibration (K)", and using a value calculated from the "returning amount (R)". The remark described above may apply to any embodiment described below.

[Embodiment 6]

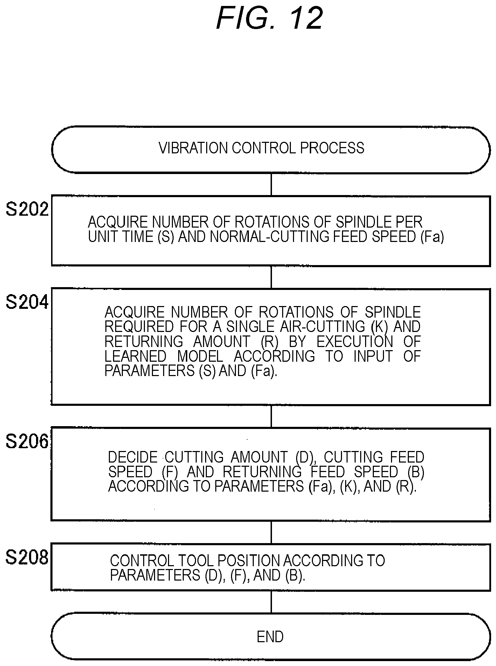

As shown in FIG. 12, the control unit U3 may acquire the number of rotations of the spindle (K) and the returning amount (R) by executing the learned model according to an input of the number of rotations of the spindle per unit time (S) and the feed speed of the object (Fa). According to the feed speed of the object (Fa), the number of rotations of the spindle (K), and the returning amount (R), the control unit U3 may decide at least one parameter among a cutting amount (D), a cutting feed speed (F) of the object, and a returning feed speed (B) of the object, where the cutting amount (D) represents a distance of a change in the position of the object per the single cycle of the vibration, the cutting feed speed (F) represents a speed of the object in the cutting feed, and the returning feed speed (B) represents a speed of the object in the returning feed. The control unit U3 controls the position of the object to be fed with the vibration at least according to the decided parameter. The embodiment provides a machine tool capable of facilitating the setting of the vibration cutting conditions.

(2) Example of machine tool configuration

FIG. 1 schematically shows a configuration of a lathe as an example of a machine tool 1 including a machine 2 and a computer 100. The machine tool 1 may be an NC (Numerical Control) lathe provided with an NC apparatus 70. The computer 100 is not essential for the machine tool 1. The machine 2 alone may be an example of the machine tool of the invention.

The machine 2 may include a headstock 10 incorporating a spindle 11 provided with a gripping part 12, a headstock driving unit 14, a tool post 20, a feed driving unit U2 for the tool post 20, and the NC apparatus 70 corresponding to a control unit U3. The headstock 10 is a collective name covering a front headstock 10A and a back headstock 10B. The front headstock 10A may incorporate a front spindle 11A provided with a gripping part 12A. The gripping part 12A may be a collet. The back headstock 10B may incorporate a back spindle 11B provided with a gripping part 12B. The gripping part 12B may be a collet. The spindle 11 is a collective name covering the front spindle 11A and the back spindle 11B. The gripping part 12 is a collective name covering the gripping part 12A and the gripping part 12B. The headstock driving unit 14 is a collective name covering a front headstock driving unit 14A for driving the front headstock 10A and a back headstock driving unit 14B for driving the back headstock 10B. A rotation driving unit U1 for the spindle 11 may include a motor 13A for rotating the front spindle 11A around a spindle axis AX1 and a motor 13B for rotating the back spindle 11B around the spindle axis AX1. The motor 13A and the motor 13B may be built in the spindle or externally provided.

The control axis of the machine 2 may include an X-axis represented by "X", a Y-axis represented by "Y", and a Z-axis represented by "Z". The direction of the Z-axis may be a horizontal direction along the spindle axis AX1 around which a workpiece W rotates. The direction of the X-axis may be a horizontal direction perpendicular to the Z-axis. The direction of the Y-axis may be a vertical direction perpendicular to the Z-axis. The Z-axis and the X-axis may necessarily cross each other but not necessarily be perpendicular. The Z-axis and the Y-axis may necessarily cross each other but not necessarily be perpendicular. The X-axis and the Y-axis may necessarily cross each other but not necessarily be perpendicular. Any drawing referred herein shows an example only for explanation of the invention, therefore never limiting the scope of the invention. Any positional description is only an example. The invention includes reverse directions and reverse rotations. The same direction covers exactly the same direction and almost the same direction allowing for a margin of error. The same position covers exactly the same position and almost the same position allowing for a margin of error.

The machine tool 1 in FIG. 1 is a lathe of spindle-sliding type. The front headstock driving unit 14Amay drive the front headstock 10A in the Z-axis direction while the back headstock driving unit 14B may drive the back headstock 10B in the Z-axis direction. The machine tool 1 may be a lathe of spindle-stationary type that the front headstock 10A does not move. The back headstock 10B may not necessarily move while the front headstock 10A may move in the Z-axis direction.

The front spindle 11A may releasably grip the workpiece W1 with the gripping part 12A. The front spindle 11A gripping the workpiece W1 may be rotatable around the spindle axis AX1. A long cylindrical (bar) material, a brand new workpiece, may be supplied from the rear side (left side in FIG. 1) of the front spindle 11A toward the gripping part 12A. A guide bush may be provided on the front side (right side in FIG. 1) of the front spindle 11A to support the workpiece W slidably in the Z-axis direction. A short material may be supplied from the front side toward the gripping part 12A. The motor 13A may rotate the front spindle 11A gripping the workpiece W around the spindle axis AX1. The workpiece W whose front end has been machined may be delivered to the back spindle 11B. The back spindle 11B may releasably grip the workpiece W with the gripping part 12B. The motor 13B may rotate the back spindle 11B gripping the workpiece W around the spindle axis AX. Upon completion of back side machining, the workpiece W may be discharged as a product.

A plurality of tools TO1 may be attached to the tool post 20. The tool post 20 may be movable in the X-axis direction and the Y-axis direction, respectively. The X-axis direction or the Y-axis direction is an example of a feed axis F1. The tool post 20 may be movable in the Z-axis direction. The tool post 20 may be a turret tool post or a gang tool post. The plurality of tools TO1 may include a turning tool such as a cut-off tool and a rotary tool such as a drill and an endmill. In this embodiment, the object to be driven by the feed driving unit U2 may be the tool TO1. The feed driving unit U2 may move the tool TO1 along the feed axis F1.

The computer 100 connected to the NC apparatus 70 may include a processor or a CPU (Central Processing Unit) 101, a semiconductor or a ROM (Read Only Memory) 102, a semiconductor or a RAM (Random Access Memory) 103, a storage device 104, an input device 105, a display device 106, a sound device 107, an I/F (Interface) 108, and a timer circuit 109. The storage device 104 may store a control program. The CPU 101 may read the program into the RAM 103 for execution. The storage device 104 may include a semiconductor memory such as a flash memory and a magnetic recording medium such as a hard disc. The input device 105 may include a pointing device, a keyboard, and a touch panel attached to the surface of the display device 106. The I/F 108 may be wired or wirelessly connected to the NC apparatus 70 to exchange data therewith. The computer 100 and the machine 2 may be connected via internet or via intranet such as a network. The computer 100 may include a personal computer including a tablet terminal and a mobile phone including a smart phone.

FIG. 2 schematically shows an electrical circuit configuration of the machine 2. The NC apparatus 70 (the control unit U3) may be connected to an operation unit 80, the rotation driving unit U1 for the spindle 11, the headstock driving unit 14, and the feed driving unit U2 for the tool post 20. The rotation driving unit U1 may include the motor 13A and a not-shown servo amplifier to rotate the front spindle 11A. The rotation driving unit U1 may further include the motor 13B and a not-shown servo amplifier to rotate the back spindle 11B. The headstock driving unit 14 may include the front headstock driving unit 14A and the back headstock driving unit 14B. The feed driving unit U2 may include servo amplifiers 31 and 32 and servo motors 33 and 34. The NC apparatus 70 may include a processor or a CPU 71, a semiconductor or a ROM 72, a semiconductor or a RAM 73, a timer circuit 74, and an I/F 75. The NC apparatus 70 may be a kind of a computer. The I/F 75 may represent interfaces of the operation unit 80, the rotation driving unit U1, the headstock driving unit 14, the feed driving unit U2, and the computer 100. The ROM 72 may store a control program PR1 for execution of a machining program PR2 written by an operator. The ROM 72 may be a rewritable semiconductor memory. The RAM 73 may store the machining program PR2 in a rewritable manner. The machining program may be called an NC program.

The CPU 71 may use the RAM 73 as a work area and execute the control program PR1 to achieve functions of the NC apparatus 70. Part or all of the functions of the control program PR1 may be achieved by other means such as ASIC (Application Specific Integrated Circuit).

The operation unit 80 may include an input unit 81 and a display unit 82 serving as a user interface of the NC apparatus 70. The input unit 81 may include a button and a touch panel for accepting the operator's input. The display unit 82 may include a display for showing various settings by the operator and various information of the machine 2. The operator may use the operation unit 80 and the computer 100 to store the machining program PR2 in the RAM 73.

The feed driving unit U2 may include the servo amplifier 31 connected to the NC apparatus 70 and the servo motor 33 connected to the servo amplifier 31 to move the tool post 20 along the X-axis, an example of the feed axis F1. The feed driving unit U2 may further include the servo amplifier 32 connected to the NC apparatus 70 and the servo motor 34 connected to the servo amplifier 32 to move the tool post 20 along the Y-axis, an example of the feed axis F1.

The servo amplifier 31 may control the position and the feed speed of the tool post 20 in the X-axis direction. The servo amplifier 32 may control the position and the feed speed of the tool post 20 in the Y-axis direction. The servo motor 33 may be provided with an encoder 35. The servo motor 33 may rotate in response to an instruction from the servo amplifier 31 to feed the tool post in the X-axis direction through a not-shown feed mechanism and a guide. The servo motor 34 may be provided with an encoder 36. The servo motor 34 may rotate in response to an instruction from the servo amplifier 32 to feed the tool post in the Y-axis direction through a not-shown feed mechanism and a guide. The feed mechanism may be a bolt mechanism. The guide may be a slide guide using a dovetail groove.

The NC apparatus 70 may issue a position instruction to the servo amplifiers 31 and 32 to feed the tool post 20. Upon receiving an X-axis position instruction from the NC apparatus 70, the servo amplifier 31 may acquire a position feedback from an output of the encoder 35 of the servo motor 33, modify the position instruction according to the position feedback, and then output a torque command to the servo motor 33. The NC apparatus can thereby control the position of the tool post 20 to be fed along the X-axis (the feed axis F1). In other words, the NC apparatus can thereby control the position of the tool TO1 to be fed along the X-axis. Upon receiving a Y-axis position instruction from the NC apparatus 70, the servo amplifier 32 may acquire a position feedback from an output of the encoder 36 of the servo motor 34, modify the position instruction according to the position feedback, and then output a torque command to the servo motor 34. The NC apparatus can thereby control the position of the tool post 20 to be fed along the Y-axis (the feed axis F1). In other words, the NC apparatus can thereby control the position of the tool TO1 to be fed along the Y-axis.

The headstock driving unit 14 may be provided with a not-shown servo amplifier and a not-shown servo motor. The front headstock driving unit 14A may move the front headstock 10A in the Z-axis direction through a not-shown feed mechanism and a guide. The back headstock driving unit 14B may move the back headstock 10B in the Z-axis direction through a not-shown feed mechanism and a guide.

Cutting the workpiece W with the tool TO1 produces swarf or chips. Cutting into the workpiece W rotated around the spindle axis AX1 without vibration control of the tool TO1 along the feed axis F1 undesirably produces so long swarf as severely affecting machining performance. As shown in FIG. 3, the feed driving unit U2 of the embodiment may repeat reciprocation of the tool TO1 or vibrate the tool TO1 along the feed axis (the X-axis or the Y-axis) to break up swarf into small pieces. The breaking-up performance depends on plural factors such as a phase of the spindle 11, an amplitude of vibration, a cutting feed speed, and a returning feed speed.

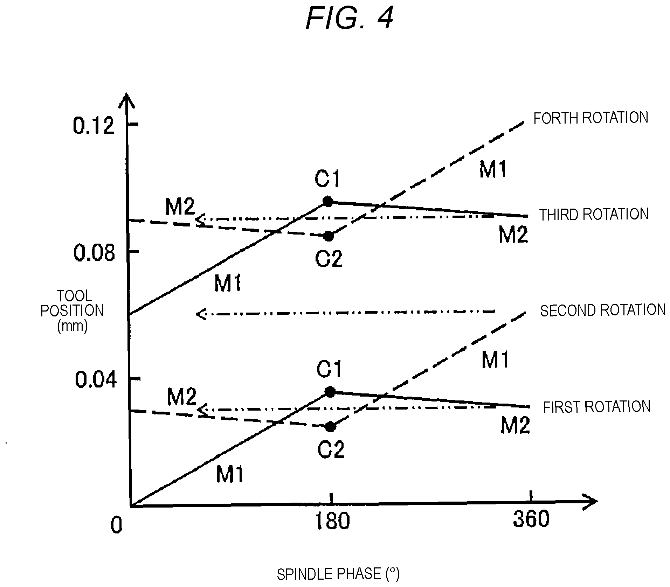

FIG. 3 schematically shows a tool position with respect to a spindle rotation angle in the case that the number of rotations of the spindle required for a single air-cutting K or the number of rotations of the spindle required for a single cycle of vibration K equals two. The air-cutting means that the tool TO1 misses the workpiece W due to vibration of the tool TO1. The air-cutting of the tool is herein simply called the air-cutting. The spindle rotation angle represents a rotation angle of the spindle 11 (the front spindle 11A or the back spindle 11B), while the rotation angle of the spindle 11 is zero degree when the tool TO1 is in a current position P1. The tool position represents a controlled position of the tool TO 1 with respect to the feed axis F1 (the X-axis or the Y-axis), while the tool position is zero when the tool TO1 is in the current position P1. A two-dot chain straight line extending from the current position P1 to an end position P2 represents a normal-cutting tool position 201. A solid polygonal line extending from the current position P1 to the end position P2 represents a vibration-cutting tool position 202. FIG. 3 further shows an expanded view of the tool position with respect to the spindle rotation angle per vibration cycle. The tool positions shown in FIG. 3 are the controlled positions by the NC apparatus 70. Actual positions may deviate from the shown positions due to delayed responses of the servo mechanisms and other factors. This remark applies to the tool positions shown in FIG. 4 to FIG. 8. Numerical values are examples only.

Vibration of the tool positions shown in FIG. 3 represents that a cutting feed M1 and a returning feed M2 are alternately repeated. The cutting feed M1 represents a feed of the tool TO1 in a direction cutting into the workpiece W1 along the feed axis F1. The returning feed M2 represents a feed of the tool TO 1 in a direction opposite to the direction of the cutting feed M1. The NC apparatus 70 controls the tool TO1 to be fed with the vibration to cut the workpiece W. The vibration includes the cutting feed M1 and the returning feed M2. The solid polygonal line of the tool position with respect to the spindle rotation angle includes a first change point C1 and a second change point C2. The first change point C1 represents a point that the cutting feed M1 changes to the returning feed M2. The second change point C2 represents a point that the returning feed M2 changes to the cutting feed M1.

In FIG. 3, the normal-cutting feed speed Fa represents a feed speed of the tool TO1 to be fed without the vibration in a unit of mm/rev, millimeters per rotation of the spindle. The number of rotations of the spindle required for a single air-cutting K represents the number of rotations of the spindle 11 required for a single vibration cycle of the tool TO1 in a unit of rev/cycle, which may be any positive value other than at least 1 rev/cycle. A cutting amount D represents the distance of a change in the position of the tool TO1 per vibration cycle in a unit of mm, representing a relative end point of each cutting feed M1 (the position of the first change point C1). The returning amount R represents a distance of the returning feed M2 per vibration cycle in a unit of mm, representing a relative end point of each returning feed M2 (the position of the second change point C2). The moving distance of the tool TO1 per vibration cycle may equal to a distance of D + R. In the case of K > 1, the single vibration cycle of the tool TO1 may include the cutting feed M1 of a distance of (D + R)/2, then the returning feed M2 of the returning amount R, and finally the cutting feed M1 of a distance of (D + R)/2.

Conventionally, controlling the position of the tool TO1 to be fed with the vibration needs a cutting feed speed F and a returning feed speed B of the tool TO1. The machining program PR2 contains a vibration feed command designating the cutting feed speed F and the returning feed speed B. The vibration feed command has at least a format of "G** X** D** F** R** B**" where the "G**" represents the number of the vibration feed command, the "X**" represents the position of the end point P2 in the feed axis X, the "D**" represents the cutting amount D, the "F**" represents the cutting feed speed F, the "R**" represents the returning amount R, and the "B**" represents the returning feed speed B. The "X**" may be replaced by the "Y**" when the feed axis is the Y-axis. Conventionally, setting the vibration conditions requires a trial and error adjustment of such many parameters as the cutting amount D, the cutting feed speed F, the returning amount R, and the returning feed speed B.

The embodiment eliminates the need of such conventional trial and error adjustment of the parameters. In the embodiment, the operator can only specify the "normal-cutting feed speed Fa," the "number of rotations of the spindle required for a single air-cutting K," and the "returning amount R" to set the vibration conditions, the details of which is being described.

FIG. 3 schematically shows an example of setting the first change point C1 and the second change point C2 in a single vibration cycle in the case of K = 2. FIG. 4 schematically shows the tool position with respect to the spindle phase in the case of K = 2. The tool positions in even numbered rotations are shown by a broken line for ease of understanding. For the cutting feed speed F, the returning feed speed B, the cutting amount D, and the returning amount R, a smaller value is desired to reduce burden on the feed-and-guide mechanism. The hill (the first change point C1) of the moving path of the tool TO1 may match the valley (the second change point C2) thereof in the spindle phase to efficiently make the air-cutting happen. For example, the hill may be set at the spindle rotation angle calculated by subtracting 180 degrees from the spindle rotation angle at the middle (K/2) of the single vibration cycle. The valley may be set at the spindle rotation angle calculated by adding 180 degrees to the spindle rotation angle at the middle (K/2) of the single vibration cycle. In the case of K = 2, the hill may be set at the spindle rotation angle of (2/2) × 360 - 180 = 180° while the valley at the spindle rotation angle of (2/2) × 360 + 180 = 540°. The spindle phases of the hill and the valley thereby match as shown in FIG. 4. The difference of the spindle rotation angles between the hill and the valley may be 360 degrees. The returning amount R may be greater than zero. That brings the valley (the second change point C2) of the even numbered rotation to be in a retracted position slightly further than the preceding hill (the first change point C1) of the odd numbered rotation, thus efficiently facilitating breaking-up of chips into small pieces. Constant change in the tool position in the cutting feed further improves breaking-up performance.

FIG. 5 schematically shows the tool position with respect to the spindle rotation angle in the case of K = 3. The hill may be set at the spindle rotation angle of (3/2) × 360 - 180 = 360° while the valley at the spindle rotation angle of (3/2) × 360 + 180 = 720°. The spindle phases of the hill and the valley thereby match, thus facilitating breaking-up of chips into small pieces. The "number of rotations of the spindle required for a single air-cutting K" may be greater than one but not limited to the integer. The hill and the valley can be similarly set in the case of K > 3, 2 < K < 3, or 1 < K < 2. Recommendation of K is two or greater since the cutting feed speed F can excessively increase in the case of 1 < K < 2.

Though not shown in the figures, the valley (the second change point C2) may be set at the spindle rotation angle of minus 180 degrees from the spindle rotation angle at the middle (K/2) of a single vibration cycle while the hill (the first change point C1) at the spindle rotation angle of plus 180 degrees to the spindle rotation angle at the middle (K/2) of the single vibration cycle. In the case of K > 1, the NC control apparatus 70 may control the difference of the spindle rotation angle between the first change point C1 and the second change point C2 to be 360 degrees, where the first change point C1 is a point that the cutting feed M1 changes to the returning feed M2 in a single vibration cycle while the second change point C2 is a point that the returning feed M2 changes to the cutting feed M1 in the single vibration cycle.

In the case of K > 2, the valley or the hill may be set at the spindle rotation angle of minus 360 degrees from the spindle rotation angle at the middle (K/2) of a single vibration cycle while the hill or the valley may be set at the spindle rotation angle of plus 360 degrees to the spindle rotation angle at the middle (K/2) of the single vibration cycle.

In the case of K > 3, the valley or the hill may be set at the spindle rotation angle of minus 540 degrees from the spindle rotation angle at the middle (K/2) of a single vibration cycle while the hill or the valley may be set at the spindle rotation angle of plus 540 degrees to the spindle rotation angle at the middle (K/2) of the single vibration cycle. Most desirably, the valley or the hill may be set at the spindle rotation angle of minus 180 degrees from the spindle rotation angle at the middle (K/2) of a single vibration cycle while the hill or the valley may be set at the spindle rotation angle of plus 180 degrees to the spindle rotation angle at the middle (K/2) of the single vibration cycle. Such embodiment can reduce the number of spindle rotations required to break up the chips and further break up the chips into smaller or fine pieces.

The NC apparatus 70 may control the moving amount of the tool TO1 per rotation of spindle to be totally equal to the normal-cutting feed speed Fa, which is the moving amount of the tool TO1 in the normal-cutting. The NC apparatus 70 can thereby feed the tool TO1 along the feed axis F 1 at the same speed as the commanded speed for the normal cutting. The number of rotations of the spindle required for a single air-cutting K may be equal to the number of rotations of the spindle 11 required for a single vibration cycle of the tool TO1. Then, the moving amount of the tool TO1 along the feed axis F1 in a single vibration cycle may be calculated by "K × Fa". As shown in FIG. 3 and FIG. 5, the NC apparatus 70 may control the tool TO1 in a single vibration cycle in the particular order of the cutting feed M1 of the distance (D + R)/2, the returning feed M2 by the returning amount R, and the cutting feed M1 of the distance (D + R)/2. The following formula may be thereby established:

$$K \times Fa = \{(D + R)/2\} \times 2 - R$$

Accordingly, the cutting amount D may be represented by:

$$D = K \times Fa \qquad \cdots (1)$$

The cutting feed speed F of the tool TO1 may be represented by:

$$F = \{(D + R)/2\} / \{(K - 1)/2\}$$

$$= (D + R) / (K - 1)$$

$$= (K \times Fa + R) / (K - 1) \qquad \cdots (2)$$

The returning feed speed B of the tool TO1 may be represented by:

$$B = R/1$$

$$= R \quad \cdots (3)$$

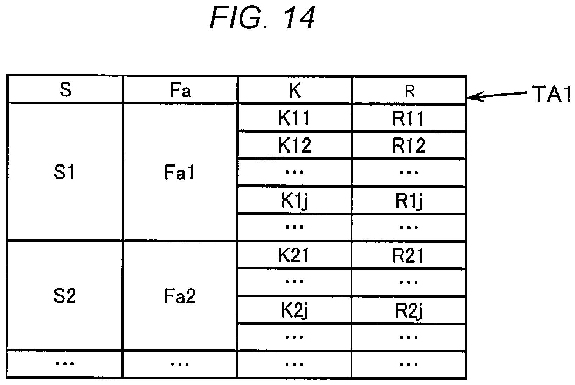

Upon receiving the "normal-cutting feed speed Fa", the "number of rotations of the spindle required for a single air-cutting K", and the "returning amount R" in the case of K > 1, the NC apparatus 70 can decide the cutting amount D, the cutting feed speed F, and the returning feed speed B according to the formulas (1), (2), and (3). The NC apparatus 70 then controls the position of the tool TO1 to be fed along the feed axis F1 according to the calculated values. The embodiment thus allows vibration cutting to be done at the same machining speed as normal cutting only by designating the "normal-cutting feed speed Fa," the "number of rotations of the spindle required for a single air-cutting K," and the "returning amount R" in the machining program PR2. A greater value of the "number of rotations of the spindle required for a single air-cutting K" makes the chips longer while makes the amplitude smaller. Desired values for the "number of rotations of the spindle required for a single air-cutting K" and the "returning amount R" depend on following property of the servo mechanisms for driving the tool TO1. They also depend on the "number of rotations of the spindle per unit time S" and the "normal-cutting feed speed Fa." FIG. 14 is an information table TA1 showing recommended values of a combination of the "number of rotations of the spindle required for a single air-cutting K" and the "returning amount R" associated with a combination of the "number of rotations of the spindle per unit time S" and the "normal-cutting feed speed Fa". The table facilitates the operator's designation of the parameters. The table TA1 provides a plurality of combinations K and R associated with a single combination of S and Fa. Assuming that the combinations K and R respectively have an identification number "j," the plurality of combinations represented by "K = K1j and R = R1j" may be associated with the single combination "S = S1 and Fa = Fa1". FIG. 14 shows recommended combinations of the "number of rotations of the spindle required for a single air-cutting K" and the "returning amount R" in response to the inputs of the "number of rotations of the spindle per unit time S" and the "normal-cutting feed speed Fa". The number of combinations of K and R may be limited.

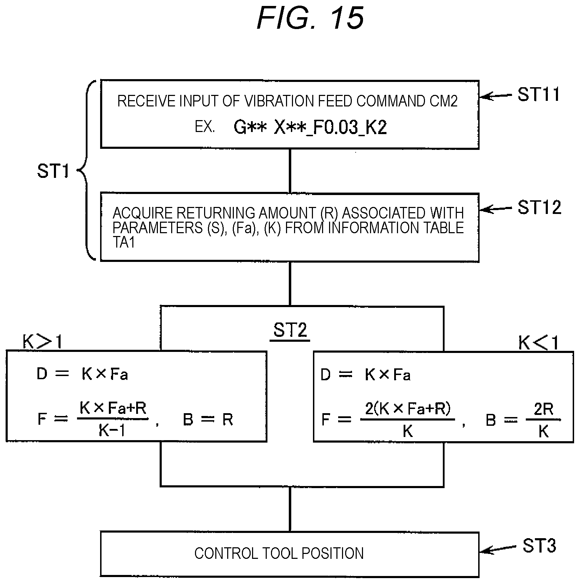

Accordingly, the "returning amount R" can be decided referring to the information table TA1 according to the "number of rotations of the spindle per unit time S", the "normal-cutting feed speed Fa", and the "number of rotations of the spindle required for a single air-cutting K". The RAM 73 may store the information table TA1 as described below referring to FIG. 15. Then the NC apparatus 70 can decide the recommended "returning amount R" according to the "number of rotations of the spindle per unit time S", the "normal-cutting feed speed Fa", and the "number of rotations of the spindle required for a single air-cutting K", eliminating the need of designating the "returning amount R".

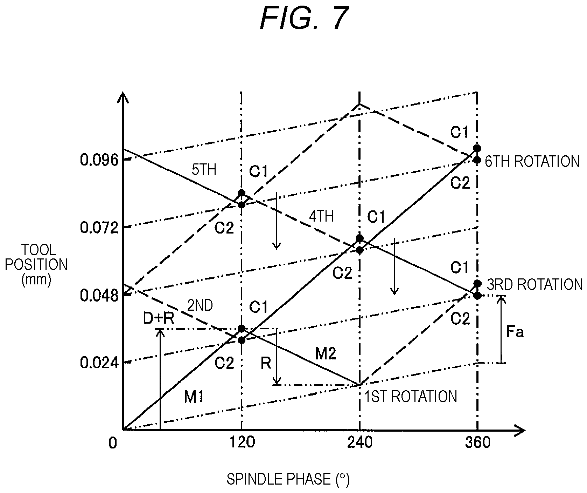

FIG. 6 schematically shows the tool position with respect to the spindle rotation angle in the case of K = 2/3. In the case of 0 < K <1, the NC apparatus 70 may control the position of the tool TO1 in a single vibration cycle in the particular order of the cutting feed M1 of distance (D + R) on the first half and the returning feed M2 of the returning amount R on the second half. FIG. 7 schematically shows the tool position with respect to the spindle phase in the case of K = 2/3. In the case of 0 < K <1, the "number of rotations of the spindle required for a single air-cutting K" may be desirably set to K = 2/3, K = 2/5, K = 2/7, and so on to efficiently make the air-cutting happen. Specifically, the denominator may be an odd number of three or more while the numerator may be two. The hill (the first change point C1) of the moving path of the tool TO1 may desirably match the valley (the second change point C2) thereof in the spindle phase. For example, the hill may be set at the spindle rotation angle at the middle (K/2) of the single vibration cycle. The valley may be set at the spindle rotation angle at the end (K) of the single vibration cycle. In the case of K = 2/3, the hill may be set at the spindle rotation angle of (2/3)/2 × 360 = 120° while the valley at the spindle rotation angle of (2/3) × 360 = 240° to match the spindle phases of the hill and the valley as shown in FIG. 7. The hill and the valley may match at the spindle phases of 120°, 240°, and 360°.

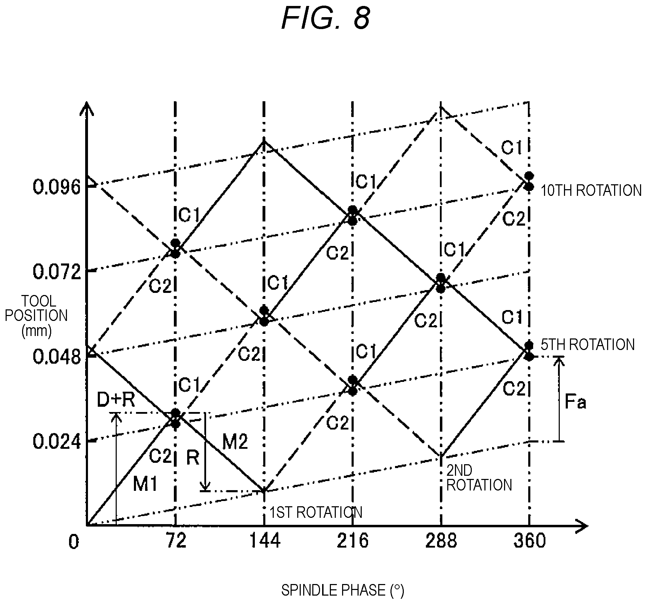

FIG. 8 schematically shows the tool position with respect to the spindle phase in the case of K = 2/5. The hill may be set at the spindle rotation angle of (2/5) / 2 × 360 = 72° while the valley at the spindle rotation angle of (2/5) × 360 = 144° to match the spindle phases of the hill and the valley as shown in FIG. 8. The hill and the valley may match at the spindle phases of 72°, 144°, 216°, 288°, and 360°. The "number of rotations of the spindle required for a single air-cutting K" may be 2/7 or less. In the case of K < 2/3, however, the feed speed of the tool TO1 and the number of rotations of the spindle 11 per unit time would be required considerably low due to following property of the servo mechanisms. Therefore, a desired value of the "number of rotations of the spindle required for a single air-cutting K" may be 2/3.

Though not shown in the figures, the valley may be set at the spindle rotation angle at the middle (K/2) of the single vibration cycle while the hill may be set at the spindle rotation angle at the end (K) of the single vibration cycle. The NC control apparatus 70 may control the difference of the spindle rotation angle between the first change point C1 and the second change point C2 to be {(K/2) × 360} degrees when the denominator of the "number of rotations of the spindle required for a single air-cutting K" is an odd number of three or more while the numerator is two.

The NC apparatus 70 may control the moving amount of the tool TO1 per rotation of spindle to be totally equal to the normal-cutting feed speed Fa, which is the moving amount of the tool TO1 in the normal cutting. The NC apparatus 70 can thereby feed the tool TO1 along the feed axis F1 at the same feed speed as the commanded speed for normal cutting. As described above, the moving amount of the tool TO1 along the feed axis F1 for a single vibration cycle can be calculated by "K × Fa". As shown in FIG. 6 to FIG. 8, the NC apparatus 70 may control the tool TO1 in a single vibration cycle in the particular order of the cutting feed M1 of the distance "(D + R)" and the returning feed M2 by the returning amount R. The following formula may be thereby established:

$$K \times Fa = (D + R) - R$$

Accordingly, the cutting amount D may be represented by:

$$D = K \times Fa \qquad \cdots (4)$$

The cutting feed speed F of the tool TO1 may be represented by:

$$F = (D + R) / (K/2)$$

$$= 2(D + R) / K$$

$$= 2(K \times Fa + R) / K \qquad \cdots (5)$$

The returning feed speed B of the tool TO1 may be represented by:

$$B = R / (K/2)$$

$$= 2R/K \qquad \cdots (6)$$

In the case of K < 1, upon receiving the "normal-cutting feed speed Fa", the "number of rotations of the spindle required for a single air-cutting K", and the "returning amount R" with respect to the feed axis F 1, the NC apparatus 70 can decide the cutting amount D, the cutting feed speed F, and the returning feed speed B according to the formulas (4), (5), and (6). The NC apparatus 70 can then control the position of the tool TO1 to be fed along the feed axis F 1 according to the calculated values.

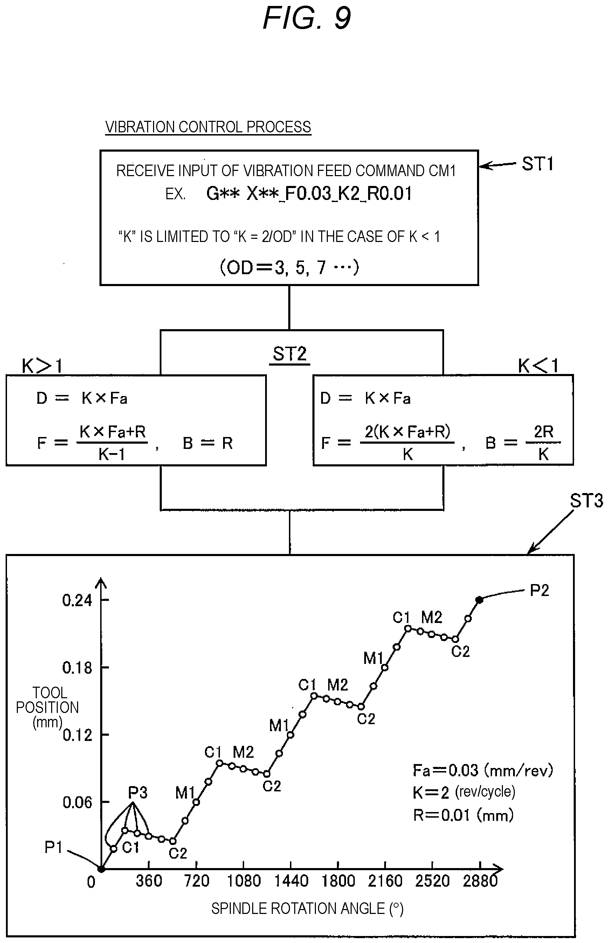

FIG. 9 shows a vibration feed command for accepting inputs of the "normal-cutting feed speed Fa", the "number of rotations of the spindle required for a single air-cutting K", and the "returning amount R". The vibration feed command CM1 in FIG. 9 may have a format "G** X**_ F**_K**_R**" where the "G**" represents the number of the command, the "X**" represents the position of the end point P2 in the feed axis X, the "F**" represents the "normal-cutting feed speed Fa", the "K**" represents the "number of rotations of the spindle required for a single air-cutting K", and the "R**" represents the returning amount R. The "X**" may be replaced by the "Y**" when the feed axis is the Y-axis.

FIG. 9 shows a vibration control process for controlling the position of the tool TO1 in response to the vibration feed command CM1. Upon receiving the vibration feed command CM1 through the operation unit 80 or the computer 100, the NC apparatus 70 stores the machining program PR2 containing the vibration feed command CM1 into the RAM 73 (Step ST1). The "number of rotations of the spindle required for a single air-cutting K" may be a positive value other than at least one. In the case of K < 1, the "number of rotations of the spindle required for a single air-cutting K" may be limited to K = 2OD where OD is an odd number of three or more. The NC apparatus 70 receives such an input of the vibration feed command CM1 as satisfying the requirements described above. The operator may refer to the information table TA1 (FIG. 14) to input the "number of rotations of the spindle required for a single air-cutting K" and the returning amount R into the command CM1. The operator may select smaller values for the "number of rotations of the spindle required for a single air-cutting K" and the "normal-cutting feed speed Fa" to improve breaking-up performance.

The NC apparatus 70 reads the vibration feed command CM1 from the machining program PR2. The NC apparatus 70 thereby receives the inputs of the "normal-cutting feed speed Fa", the "number of rotations of the spindle required for a single air-cutting K", and the "returning amount R" whose parameters are all designated in the command CM1 (Step ST1).

Upon receiving the "normal-cutting feed speed Fa", the "number of rotations of the spindle required for a single air-cutting K", and the "returning amount R" with respect to the feed axis F1, the NC apparatus 70 can decide the cutting amount D, the cutting feed speed F, and the returning feed speed B (Step ST2). In the case of K > 1, the cutting amount D may be calculated by "D = K × Fa" according to formula (1) described above. The cutting feed speed F may be calculated by "F = = (K × Fa + R) / (K - 1)" according to formula (2) described above. The returning feed speed B may be calculated by "B = R" according to formula (3) described above. In the case of K < 1, the cutting amount D may be calculated by "D = K × Fa" according to formula (4) described above. The cutting feed speed F may be calculated by "F = 2(K × Fa + R) / K" according to formula (5) described above. The returning feed speed B may be calculated by "B = 2R/K" according to formula (6) described above.

The NC apparatus 70 then controls the position of the tool TO1 to be fed along the feed axis F1 according to the calculated values (Step ST3). The NC apparatus 70 may set a plurality of positions P3 along the feed axis F1 between the current position P1 and the end position P2. The NC apparatus 70 outputs a position instruction to the servo amplifier 31 or 32 to sequentially move the tool TO1 to the positions P3 by repeating the cutting feed M1 and the returning feed M2. The positions P3 are shown by white dots in FIG. 9. The positions P3 includes the change points (the first change point C1 and the second change point C2), the end point P2, and any intermediate point during the cutting feed M1 and the returning feed M2. The NC apparatus 70 repeats the position instruction described above to control the position of the tool TO1 according to the calculated values D, F, and B.

The embodiment allows the vibration cutting to be done at the same speed as the normal cutting only by designating the "normal-cutting feed speed Fa", the "number of rotations of the spindle required for a single air-cutting K", and the "returning amount R". The embodiment eliminates the need of inputting some parameters such as the cutting feed speed F and the returning feed speed B. Such simplified operation facilitates the setting of the vibration cutting conditions.

FIG. 15 shows another vibration control process. The NC apparatus 70 may control the tool position with another vibration feed command CM2. The command CM2 may be a command excluding the returning amount R (R**) from the command CM1 shown in FIG. 9. Step ST1 includes sub-steps ST11 and ST12. The information table TA1 shown in FIG. 14 is stored in the RAM 73 prior to the execution of the FIG. 15 process. Upon receiving the vibration feed command CM2 through the operation unit 80 or the computer 100, the NC apparatus 70 stores the machining program PR2 containing the vibration feed command CM2 into the RAM 73 (Step ST11). The vibration feed command CM2 follows a command designating the "number of rotations of the spindle per unit time S".

The NC apparatus 70 reads the vibration feed command CM2 from the machining program PR2. The NC apparatus 70 receives the inputs of the "normal-cutting feed speed Fa" and the "number of rotations of the spindle required for a single air-cutting K" whose parameters are all designated in the command CM2 (Step ST11). Then the NC apparatus 70 can acquire the "returning amount R" from the table TA1 according to the "number of rotations of the spindle per unit time S", the "normal-cutting feed speed Fa", and the "number of rotations of the spindle required for a single air-cutting K" (Step ST12). Accordingly, the "returning amount R" can be automatically decided from the parameters S, Fa, and K.

According to the parameters Fa, K, and R with respect to the feed axis F1, the NC apparatus 70 decides the cutting amount D, the cutting feed speed F, and the returning feed speed B (Step ST2). The NC apparatus 70 then controls the position of the tool TO1 to be fed along the feed axis F1 according to the cutting amount D, the cutting feed speed F, and the returning feed speed B (Step ST3). The machine tool 1 can provide the vibration cutting to be performed at the same machining time as the normal cutting without an input of the "returning amount R". A greater value of the "number of rotations of the spindle required for a single air-cutting K" makes the chips longer. The operator can decide the "number of rotations of the spindle required for a single air-cutting K" by actually monitoring the length of the chips while the "number of rotations of the spindle per unit time S" and the "normal-cutting feed speed Fa" are fixed. The "returning amount R" can be thereby properly decided. The embodiment shown in FIG. 15 can further facilitate the setting of the vibration cutting conditions.

According to the parameters Fa, K, and R, the NC apparatus 70 can calculate all of the parameters of the cutting amount D, the cutting feed speed F, and the returning feed speed B as described above. The NC apparatus 70 may, however, receive an input of part of the parameters D, F, and B. For example, the NC apparatus 70 may receive an input of the cutting amount D while calculate the cutting feed speed F and the returning feed speed B. The NC apparatus 70 may receive inputs of the cutting amount D and the cutting feed speed F while calculate the returning feed speed B.

(3) Application of machine learning

Another embodiment provides the machine tool capable of further facilitating the setting of the vibration cutting conditions through machine learning as shown in FIG. 10 to FIG. 13. FIG. 10 schematically shows the machine tool 1 including the computer 100 provided with a machine learning unit U4. Description is being omitted for any elements already shown in FIG. 1 and FIG. 2. FIG. 10 also shows an example of a database DB.

The computer 100 includes the storage device 104 adapted to store a machine learning program PR3 corresponding to the machine learning unit U4. The machine learning program PR3 is read into the RAM 103 by the CPU 101. The RAM 103 stores the database DB and a learned model LM generated by the database DB. The learned model LM is a program for use to decide the "number of rotations of the spindle required for a single air-cutting K" and the "returning amount R" that generates an overlap between the position of the tool TO1 at the first change point C1 and the position of the tool TO1 at the second change point C2. The first change point is a point that the cutting feed M1 changes to the returning feed M. The second change point C2 is a point that the returning feed M2 changes to the cutting feed M1.

The generated learned model LM may be transmitted to the NC apparatus 70 to be stored in the RAM 73 thereof. The NC apparatus can thereby decide the "number of rotations of the spindle required for a single air-cutting K" and the "returning amount R" according to the learned model LM.

The database DB stores the "number of rotations of the spindle per unit time S", the "normal-cutting feed speed Fa", the "number of rotations of the spindle required for a single air-cutting K", the "returning amount R", and a determination result E representing whether or not the position of the tool TO1 at the first change point C overlaps the position of the tool TO1 at the second change point. The "number of rotations of the spindle per unit time S" represents the number of rotation of the spindle 11 per unit time. The determination result S depend on the positions of the tool TO1 actually measured when the tool TO1 moves along the feed axis F1 with vibration including the cutting feed M1 and the returning feed M2 under a test program PR4, which corresponds to the machining program PR2 shown in FIG. 2. The determination result E is represented by "overlap" or "no overlap" according to whether the hill overlaps the valley with respect to the phase of the spindle 11 in the actual measurement. The database DB stores an identification number "i," which is identification information for recognizing a record. The identification number "i" is associated with the "number of rotations of the spindle per unit time Si," the "normal-cutting feed speed Fai," the "number of rotation of the spindle Ki required for a single air-cutting," the "returning amount Ri," and the determination result Ei.

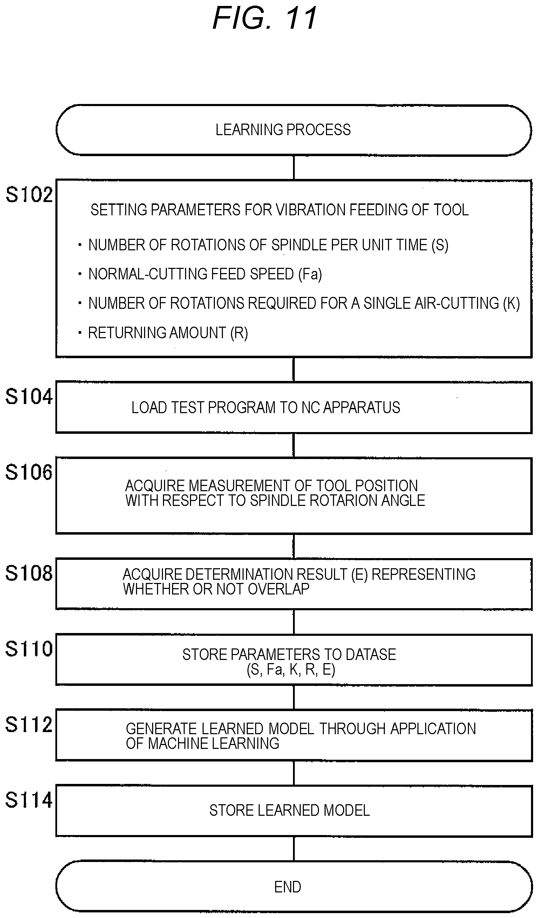

FIG. 11 shows an example of a learning process for generating the learned model LM. The computer 100, which executes the machine learning program PR3, may start the process. First, the computer 100 sets a vibration feed parameter for the tool TO1 (Step S102). The vibration feed parameter may include the "number of rotations of the spindle per unit time S," the "normal-cutting feed speed Fa," the "number of rotations of the spindle required for a single air-cutting K," and the "returning amount R." The computer 100 may set the parameter according to an input by the operator. The computer 100 may sequentially set the parameter according to a predetermined rule when the Steps S102 to S108 are repeated.

The computer 100 then loads the test program PR4 into the NC apparatus 70 (Step S104). The test program PR4 may contain a command designating the "number of rotations of the spindle per unit time S" and the vibration feed command CM1 designating the parameters Fa, K, and R.

The computer 100 then acquires the measurement of the tool position with respect to the spindle rotation angle in the feed axis F1 from the NC apparatus 70 (Step S106). Specifically, the NC apparatus 70 controls movement of the tool TO1 along the feed axis F1 according to the test program PR4 and outputs the measurement to the computer 100. The measurement relates to the tool position with respect to the spindle rotation angle in the feed axis F1.

The computer 100 determines whether or not the position of the tool TO1 at the first change point C overlaps the position of the tool TO1 at the second change point according to the measurement to acquire the corresponding determination result E representing "overlap" or "no overlap" (Step S108). According to the measurement, the computer 100 sets "overlap" in the determination result E in the case that the hill overlaps the valley with respect to the spindle phase while sets "no overlap" in the case that the hill does not overlap the valley with respect to the spindle phase. The computer 100 may show the measurement on the display 106 to accept an input of the determination result E from the operator.

The computer 100 then stores the parameters S, Fa, K, and R set in S 102 and the determination result E acquired in S 108 into the database DB (Step S 110). The process S 102 to S108 may be repeated to increase the number of records to be stored in the database DB.

The computer 100 then generates the learned model LM in the RAM 103 through application of supervised learning according to the information stored in the database DB (Step S112). The learned model LM may include a neural network, a Bayesian network, and a learned model combining a main part constituting at least one of the networks and a conversion formula. Any learned model LM including the neural network may develop through application of deep learning. Description is being omitted for any machine learning method described above, the details of which is known to the public. By using the learned model LM, the computer 100 can decide the "number of rotations of the spindle required for a single air-cutting K" and the "returning amount R" that generates an overlap between the position of the tool TO1 at the first change point C1 and the position of the tool TO1 at the second change point C2.

The computer 100 stores the learned model LM (Step S114) and then ends the learning process. The computer 100 may send the learned model LM to the NC apparatus 70. The NC apparatus 70 may store the learned model LM in the RAM 73. By using the learned model LM, the NC apparatus 70 can decide the "number of rotations of the spindle required for a single air-cutting K" and the "returning amount R" to control the position of the tool TO1 to be fed with the vibration.

FIG. 12 shows an example of a vibration control process for controlling the position of the tool TO1 by deciding the "number of rotations of the spindle required for a single air-cutting K" and the "returning amount R" with regard to the feed axis F 1. The NC apparatus 70 as the control unit U3 may execute the process. First, the NC apparatus 70 acquires the "number of rotations of the spindle per unit time S" and the "normal-cutting feed speed Fa" of the tool TO1 to be fed with the vibration along the feed axis F1 (Step S202). The NC apparatus 70 may acquire the parameters S and Fa from the machining program PR2. The NC apparatus 70 may acquire the parameters through an input by the operator.

The NC apparatus 70 inputs the acquired the "number of rotations of the spindle per unit time S" and the "normal-cutting feed speed Fa" into the learned model LM to output the "number of rotations of the spindle required for a single air-cutting K" and the "returning amount R". When the learned model LM is stored in the RAM 73, the NC apparatus can execute the learned model LM to decide the parameters K and R. When the learned model LM is stored in the RAM 103 of the computer 100, the NC apparatus can send the parameters S and Fa to the computer 100 to acquire the parameters K and R from the computer 100. The computer 100 may input the parameters S and Fa to the learned model LM to acquire the parameters K and R to be sent to the NC apparatus 70. The NC apparatus 70 can thereby acquire the "number of rotations of the spindle required for a single air-cutting K" and the "returning amount R" though execution of the learned model LM according to an input of the "number of rotations of the spindle per unit time S" and the "normal-cutting feed speed Fa".

According to the parameters Fa, K, and R with respect to the feed axis F 1, the NC apparatus 70 decides the cutting amount D, the cutting feed speed F of the tool TO1, and the returning feed speed B of the tool TO1 (Step S206). The NC apparatus 70 controls the position of the tool TO1 to be fed along the feed axis F 1 according to the cutting amount D, the cutting feed speed F, and the returning feed speed B (Step S208) and then end the vibration control process. The computer 100 may cooperate with the NC apparatus 70 to execute the vibration control process.

Setting the parameters of the "number of rotations of the spindle required for a single air-cutting K" and the "returning amount R" to improve breaking-up performance depends on the parameters of the "number of rotations of the spindle per unit time S" and the "normal-cutting feed speed Fa". The learned model M is generated though application of machine learning according to the parameters S, Fa, K, and R as well as the determination result E representing whether or not the tool positions at the first change point and the second change point overlap. By using the learned model LM, the computer 100 can decide the parameters K and R that generates the overlap between the tool positions at the first change point and the second change point. The computer 100 can thereby control the position of the tool TO1 according to the "normal-cutting feed speed Fa", the "number of rotations of the spindle required for a single air-cutting K" and the "returning amount R". The example shown in FIG. 10 to FIG. 12 provides a machine tool capable of generating the learned model LM facilitating the setting of the vibration cutting conditions.

As shown in FIG. 13, the machine 2 may execute the machine learning program PR3 to generate the learned model LM. FIG. 13 schematically shows the machine 2 provided with the machine learning unit U4. Description is being omitted for any element already shown in FIG. 2. FIG. 13 also shows the database DB. The database DB in FIG. 13 is the same as that in FIG. 10.

The ROM 72 of the NC apparatus 70 stores the control program PR1 corresponding to the control unit U3 and the machine learning program PR3 corresponding to the machine learning unit U4. The RAM 73 stores the machining program PR2, the test program PR4, the database DB, and the learned model LM. The learned model LM is a program for use to decide the "number of rotations of the spindle required for a single air-cutting K" and the "returning amount R" that generates an overlap between the positions of the tool TO 1 at the first change point C1 and at the second change point C2.

The NC apparatus 70 can execute the learning process of Steps S102, S106 to S114 shown in FIG. 11. First, the NC apparatus 70 sets the parameters S, Fa, K, and R in the test program PR4 (Step S102). Then, the NC apparatus 70 executes the test program PR4 to acquire the measurement of the tool position with respect to the spindle rotation angle in the feed axis F1 (Step S106). The NC apparatus 70 determines whether or not the position of the tool TO1 at the first change point C overlaps the position of the tool TO1 at the second change point according to the measurement. The NC apparatus 70 then acquires the corresponding determination result E representing "overlap" or "no overlap" (Step S108). The NC apparatus 70 then stores the parameters S, Fa, K, and R set in S102 and the determination result E acquired in S108 into the database DB (Step S110). The process S102 to S108 may be repeated to increase the number of records to be stored in the database DB. The NC apparatus 70 then generates the learned model LM in the RAM 103 through application of supervised learning according to the information stored in the database DB (Step S112). The NC apparatus 70 may store the learned model LM as required (Step S114) in a memory such as the ROM 72, a not-shown memory in the machine 2, and the storage device 104 of the computer 100. The NC apparatus 70 then ends the learning process. The NC apparatus 70 performs the vibration control process when the learned model LM is stored in the RAM 73.

The example shown in FIG. 13 provides a machine tool capable of generating the learned model LM facilitating the setting of the vibration cutting conditions while saving the cost. The machine learning unit U4 may be executed by cooperation of the NC apparatus 70 and the computer 100. The control unit U3 may be executed by cooperation of the NC apparatus 70 and the computer 100.

(4) Modified embodiments

The invention may be embodied in various modifications. For example, the feed axis may be any axis such as the X-axis, the Y-axis, and the Z-axis. The object that moves along the feed axis F1 may be the tool TO1, the spindle 11 gripping the workpiece W1 or both of the tool TO1 of the spindle 11. When the object is the spindle 11, the NC apparatus 70 may control the vibration feed of the spindle 11 along the feed axis F1 during cutting the workpiece W1. When the object is both of the tool TO1 and the spindle 11, the NC apparatus 70 may control the vibration feed of the tool TO1 and the spindle 11 along the feed axis F1 during cutting the workpiece W1. Any of the processes described above may be appropriately modified. For example, the order of steps may be appropriately changed.

As described above, the invention can provide technology of the machine tool capable of facilitating the setting of the vibration cutting conditions. The technology only consisting of the elements of any independent claims can provide the function and the effect described above. The invention can be embodied in any configuration replacing the elements or changing the combination of the elements between the embodiments described above. The invention can be embodied in any configuration replacing the elements or changing the combination of the elements between the prior art and any of the embodiments described above. Such configurations are all included within the scope of the invention.

**DESCRPTION OF SYMBOLS**

1 Machine tool, 2 Machine, 10 Headstock, 11 Spindle,
12 Gripping part, 13A, 13B Moror, 14 Headstock driving unit,
20 Tool post, 31,32 Servo amplifier,
33,34 Servo Motor, 35,36 Encoder,
70 NC apparatus, 100 Computer,
201 Normal-cutting tool position, 202 Vibration-cutting tool position,
AX1 Spindle axis, C1 First change point, C2 Second change point,
CM1 Vibration feed command, DB Database, F1 Feed axis,
LM Learned Model, M1 Cutting feed, M2 Returning Feed,
P1 Current position, P2 End point, P3 Position, PR1 Control program,
PR2 Machining program, PR2 Machine learning program,
PR4 Test program, TO1 Tool,
U1 Rotation driving unit, U2 Feed driving unit, U3 Control unit,
U4 Machine learning unit, W1 workpiece.

**Claims**

1. A machine tool comprising:

   a rotation driving unit adapted to rotate a spindle gripping a workpiece;
   a feed driving unit adapted to feed at least one object along a feed axis, the object comprising the spindle and a tool for cutting the workpiece; and
   a control unit adapted to control the object to be fed with a vibration along the feed axis to cut the workpiece, the vibration comprising a cutting feed in a direction cutting into the workpiece and a returning feed in a direction opposite to the direction cutting into the workpiece;
   wherein the control unit acquires a feed speed of the object to be fed without the vibration (Fa), a number of rotations of the spindle required for a single cycle of the vibration (K), and a returning amount (R) representing a distance of the returning feed per the single cycle of the vibration,
   according to the feed speed of the object (Fa), the number of rotations of the spindle (K), and the returning amount (R), the control unit decides at least one parameter among a cutting amount (D) representing a distance of a change in a position of the object per the single cycle of the vibration, a cutting feed speed (F) representing a speed of the object in the cutting feed, and a returning feed speed (B) representing a speed of the object in the returning feed, and
   the control unit controls the position of the object to be fed with the vibration at least according to the decided parameter.

2. The machine tool of claim 1, wherein the control unit decides the cutting amount (D), the cutting feed speed (F), and the returning feed speed (B) according to the feed speed of the object (Fa), the number of rotations of the spindle (K), and the returning amount (R), and
   the control unit controls the position of the object to be fed with the vibration according to the decided parameters.

3. The machine tool of claim 1 or 2, wherein, upon receipt of the number of rotations of the spindle (K) of greater than a single rotation, the control unit sets a difference in rotation angle of the spindle to 360 degrees between a first change point and a second change point, where the first change point is a point that the cutting feed changes to the returning feed in the single cycle of the vibration and the second change point is a point that the returning feed changes to the cutting feed in the single cycle of the vibration.

4. The machine tool of claim 1 or 2, wherein, upon receipt of the number of rotations of the spindle (K) having a denominator of an odd number of three or more and a numerator of two, the control unit sets a difference in rotation angle of the spindle to $\{(K/2) \times 360\}$ degrees between a first change point and a second change point, where the first change point is a point that the cutting feed changes to the returning feed in the single cycle of the vibration and the second change point is a point that the returning feed changes to the cutting feed in the single cycle of the vibration.

5. A machine tool comprising

a rotation driving unit adapted to rotate a spindle gripping a workpiece;

a feed driving unit adapted to feed at least one object along a feed axis, the object comprising the spindle and a tool for cutting the workpiece;

a control unit adapted to control the object to be fed with a vibration along the feed axis to cut the workpiece, the vibration comprising a cutting feed in a direction cutting into the workpiece and a returning feed in a direction opposite to the direction cutting into the workpiece; and

a machine learning unit adapted to generate a learned model through application of a machine learning according to a number of rotations of the spindle per unit time (S), a feed speed of the object to be fed without the vibration (Fa), a number of rotations of the spindle required for a single cycle of the vibration (K), and a returning amount (R) representing a distance of the returning feed per the single cycle of the vibration we well as a determination result (E) representing whether or not a position of the object at a first change point overlaps a position of the object at a second change point, the first change point being a point that the cutting feed changes to the returning feed while the second change point being a point that the returning feed changes to the cutting feed, and the learned model allowing a computer to decide the number of rotations of the spindle (K) and the returning amount (R) that generates an overlap between the positions of the object at the first change point and the second change point according to the number of rotations of the spindle per unit time (S) and the feed speed of the object (Fa).

6. The machine tool of claim 5, wherein the control unit acquires the number of rotations of the spindle (K) and the returning amount (R) by executing the learned model according to an input of the number of rotations of the spindle per unit time (S) and the feed speed of the object (Fa),

according to the feed speed of the object (Fa), the number of rotations of the spindle (K), and the returning amount (R), the control unit decides at least one parameter among a cutting amount (D), a cutting feed speed (F), and a returning feed speed (B), where the cutting amount (D) represents a distance of a change in the position of the object per the single cycle of the vibration, the cutting feed speed (F) represents a speed of the object in the cutting feed, and the returning feed speed (B) represents a speed the object in the returning feed, and

the control unit controls the position of the object to be fed with the vibration at least according to the decided parameter.

## FIG. 1

MACHINE TOOL 1

MACHINE 2

U2

TO1

Y X
Z

NC APPARATUS 70
(U3)

TO1

20

(10) (U1) (11)
AX1 10A 13A 11A

12A(12)

(12) (11)
12B 11B

(U1) (10)
13B 10B

W1 W1

14A(14)

14B(14)

COMPUTER 100

I/F 108

STORAGE DEVICE 104

TIMER CIRCUIT 109

INPUT DEVICE 105

CPU 101

DISPLAY DEVICE 106

ROM 102

SOUND DEVICE 107

RAM 103

# FIG. 2

MACHINE TOOL 1

NC APPARATUS 70 (U3)

TIMER CIRCUIT 74

CPU 71

ROM 72

CONTROL PROGRAM
PR1

RAM 73

MACHINING
PROGRAM
PR2

I/F 75

COMPUTER 100

OPERATION UNIT 80

INPUT UNIT 81

DISPLAY UNIT 82

ROTATION
DRIVING UNIT U1

HEADSTOCK
DRIVING UNIT 14

FEED DRIVING UNIT U2

SERVO
AMP
31

SERVO
MOTOR
33  35

Y(F1)

TOOL POST
20

(F1)
X

SERVO
AMP
32

SERVO
MOTOR
34  36

2

# FIG. 3

# FIG. 4

# FIG. 5

## FIG. 6

Fa=0.024 (mm/rev)
K=2/3 (rev/cycle)
R=0.02 (mm)

SPINDLE ROTATION ANGLE (°)

# FIG. 7

# FIG. 8

# FIG. 9

VIBRATION CONTROL PROCESS

RECEIVE INPUT OF VIBRATION FEED COMMAND CM1
EX.   G** X**_F0.03_K2_R0.01

"K" IS LIMITED TO "K = 2/OD" IN THE CASE OF K < 1

$$(OD = 3, 5, 7 \cdots)$$

← ST1

ST2

K > 1

$$D = K \times Fa$$

$$F = \frac{K \times Fa + R}{K-1}, \quad B = R$$

K < 1

$$D = K \times Fa$$

$$F = \frac{2(K \times Fa + R)}{K}, \quad B = \frac{2R}{K}$$

ST3

TOOL POSITION (mm)

Fa = 0.03 (mm/rev)
K = 2 (rev/cycle)
R = 0.01 (mm)

SPINDLE ROTATION ANGLE (°)

# FIG. 10

2 →

**NC APPARATUS 70 (U3)**

**RAM 73**

LEARNED MODEL LM

TEST PROGRAM PR4

→ ROTATION DRIVING UNIT U1

→ FEED DRIVING UNIT U2 — **20**

← 1

S, Fa, K, R

**COMPUTER 100**

**CPU 101**     INPUT DEVICE 105

**STORAGE DEVICE 104**

MACHINE LEARNING PROGRAM PR3 ← U4

**RAM 103**

LEARNED MODEL LM

DATABASE DB

**DB**

| No. | S | Fa | K | R | E |
|-----|-----|-----|-----|-----|-----|
| 1 | S1 | Fa1 | K1 | R1 | OVERLAP |
| 2 | S2 | Fa2 | K2 | R2 | NO OVERLAP |
| 3 | S3 | Fa3 | K3 | R3 | OVERLAP |
| 4 | S4 | Fa4 | K4 | R4 | NO OVERLAP |
| ... | ... | ... | ... | ... | ... |
| i | Si | Fai | Ki | Ri | Ei |
| ... | ... | ... | ... | ... | ... |

# FIG. 11

```
┌─────────────────────────────────────────────────────┐
│                LEARNING PROCESS                      │
└─────────────────────────────────────────────────────┘
```

**S102**

SETTING PARAMETERS FOR VIBRATION FEEDING OF TOOL

· NUMBER OF ROTATIONS OF SPINDLE PER UNIT TIME (S)

· NORMAL-CUTTING FEED SPEED (Fa)

· NUMBER OF ROTATIONS REQUIRED FOR A SINGLE AIR-CUTTING (K)

· RETURNING AMOUNT (R)

**S104**

LOAD TEST PROGRAM TO NC APPARATUS

**S106**

ACQUIRE MEASUREMENT OF TOOL POSITION
WITH RESPECT TO SPINDLE ROTARION ANGLE

**S108**

ACQUIRE DETERMINATION RESULT (E) REPRESENTING
WHETHER OR NOT OVERLAP

**S110**

STORE PARAMETERS TO DATASE
(S, Fa, K, R, E)

**S112**

GENERATE LEARNED MODEL THROUGH APPLICATION
OF MACHINE LEARNING

**S114**

STORE LEARNED MODEL

```
┌─────────────────────────────────────────────────────┐
│                        END                           │
└─────────────────────────────────────────────────────┘
```

# FIG. 12

```
                    ┌─────────────────────────────────────┐
                    │       VIBRATION CONTROL PROCESS      │
                    └─────────────────────────────────────┘
                                      │
    S202  ┌───────────────────────────────────────────────────┐
          │ ACQUIRE NUMBER OF ROTATIONS OF SPINDLE PER         │
          │ UNIT TIME (S) AND NORMAL-CUTTING FEED SPEED (Fa)   │
          └───────────────────────────────────────────────────┘
                                      │
    S204  ┌───────────────────────────────────────────────────┐
          │ ACQUIRE NUMBER OF ROTATIONS OF SPINDLE             │
          │ REQUIRED FOR A SINGLE AIR-CUTTING (K) AND          │
          │ RETURNING AMOUNT (R) BY EXECUTION OF               │
          │ LEARNED MODEL ACCORDING TO INPUT OF                │
          │ PARAMETERS (S) AND (Fa).                           │
          └───────────────────────────────────────────────────┘
                                      │
    S206  ┌───────────────────────────────────────────────────┐
          │ DECIDE CUTTING AMOUNT (D), CUTTING FEED            │
          │ SPEED (F) AND RETURNING FEED SPEED (B)             │
          │ ACCORDING TO PARAMETERS (Fa), (K), AND (R).        │
          └───────────────────────────────────────────────────┘
                                      │
    S208  ┌───────────────────────────────────────────────────┐
          │ CONTROL TOOL POSITION ACCORDING TO                 │
          │ PARAMETERS (D), (F), AND (B).                      │
          └───────────────────────────────────────────────────┘
                                      │
                    ┌─────────────────────────────────────┐
                    │                 END                 │
                    └─────────────────────────────────────┘
```

## FIG. 13

MACHINE TOOL 1

NC APPARATUS 70

**CPU 71**

OPERATION UNIT 80

INPUT UNIT 81 | DISPLAY UNIT 82

**ROM 72**

CONTROL PROGRAM
**PR1**

U3

MACHINE LEARNING
PROGRAM PR3

U4

ROTATION DRIVING UNIT
U1

**RAM 73**

MACHINING
PROGRAM
**PR2**

HEADSTOCK DRIVING
UNIT U14

TEST PROGRAM
**PR4**

FEED DRIVING UNIT U2

LEARNED MODEL
**LM**

DATABASE
**DB**

2

DB

| No. | S | Fa | K | R | E |
|-----|-----|-----|-----|-----|-----|
| 1 | S1 | Fa1 | K1 | R1 | OVERLAP |
| 2 | S2 | Fa2 | K2 | R2 | NO OVERLAP |
| 3 | S3 | Fa3 | K3 | R3 | OVERLAP |
| 4 | S4 | Fa4 | K4 | R4 | NO OVERLAP |
| ... | ... | ... | ... | ... | ... |
| i | Si | Fai | Ki | Ri | Ei |
| ... | ... | ... | ... | ... | ... |

## FIG. 14

| S | Fa | K | R | |
|---|---|---|---|---|
| S1 | Fa1 | K11 | R11 | ← TA1 |
| | | K12 | R12 | |
| | | ... | ... | |
| | | K1j | R1j | |
| | | ... | ... | |
| S2 | Fa2 | K21 | R21 | |
| | | ... | ... | |
| | | K2j | R2j | |
| | | ... | ... | |
| ... | ... | ... | ... | |

# FIG. 15

RECEIVE INPUT OF VIBRATION FEED COMMAND CM2
EX. G** X**_F0.03_K2 ← ST11

ST1 {

ACQUIRE RETURNING AMOUNT (R) ASSOCIATED WITH PARAMETERS (S), (Fa), (K) FROM INFORMATION TABLE TA1 ← ST12

ST2

K > 1

$$D = K \times Fa$$

$$F = \frac{K \times Fa + R}{K - 1}, \quad B = R$$

K < 1

$$D = K \times Fa$$

$$F = \frac{2(K \times Fa + R)}{K}, \quad B = \frac{2R}{K}$$

CONTROL TOOL POSITION ← ST3

## INTERNATIONAL SEARCH REPORT

| International application No. |
|---|
| **PCT/JP2022/019623** |

### A. CLASSIFICATION OF SUBJECT MATTER

***B23B 1/00***(2006.01)i; ***G05B 19/4093***(2006.01)i; ***G05B 19/4155***(2006.01)i
FI: B23B1/00 A; B23B1/00 N; G05B19/4093 M; G05B19/4155 V

According to International Patent Classification (IPC) or to both national classification and IPC

### B. FIELDS SEARCHED

Minimum documentation searched (classification system followed by classification symbols)

B23B 1/00; G05B 19/4093, 19/4155; B23Q 15/00, 15/013

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/085437 A1 (MITSUBISHI ELECTRIC CORP.) 30 April 2020 (2020-04-30) paragraphs [0179], [0181] | 1-6 |
| A | JP 2020-163487 A (FANUC LTD.) 08 October 2020 (2020-10-08) paragraphs [0032], [0037] | 1-6 |
| A | WO 2016/031897 A1 (CITIZEN HOLDINGS CO., LTD.) 03 March 2016 (2016-03-03) fig. 4a-4D | 1-6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/019623**

| Patent document cited in search report | | | Publication date (day/month/year) | Patent family member(s) | | | Publication date (day/month/year) |
|---|---|---|---|---|---|---|---|
| WO | 2020/085437 | A1 | 30 April 2020 | US | 2021/0382455 | A1 | |
| | | | | paragraphs [0196], [0198] | | | |
| | | | | CN | 112912804 | A | |
| JP | 2020-163487 | A | 08 October 2020 | US | 2020/0306916 | A1 | |
| | | | | paragraphs [0036], [0041] | | | |
| | | | | DE | 102020203935 | A1 | |
| | | | | CN | 111752214 | A | |
| WO | 2016/031897 | A1 | 03 March 2016 | US | 2017/0246718 | A1 | |
| | | | | fig. 4a-4D | | | |
| | | | | EP | 3187290 | A1 | |
| | | | | KR | 10-2017-0047353 | A | |
| | | | | CN | 106715011 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019028831 A